# EUROPÄISCHE PATENTSCHRIFT

(11) **EP 1 857 698 B1**
(45) Veröffentlichungstag und Bekanntmachung des Hinweises auf die Patenterteilung: **26.10.2011**
(21) Anmeldenummer: 07009096.4
(22) Anmeldetag: 05.05.2007
(51) Int. Cl.: F16D 25/0638, F16D 25/12

(54) **Kopplungsanordnung**
Coupling assembly
Agencement d'accouplement

(30) Priorität: 18.05.2006 DE 102006023288
(43) Veröffentlichungstag der Anmeldung: 21.11.2007
(73) Patentinhaber: ZF Friedrichshafen AG, 88046 Friedrichshafen (DE)
(72) Erfinder: Sudau, Jörg, 97464 Niederwerrn (DE); Fenn, Peter, 97534 Waigolshausen (DE)

(56) Entgegenhaltungen:
- EP-A1- 1 584 830
- EP-A2- 0 822 350
- EP-A2- 1 378 679
- EP-A2- 1 610 018
- DE-C1- 3 915 186
- FR-A1- 2 871 109

## Beschreibung

Die Erfindung betrifft eine Kopplungsanordnung gemäß dem Oberbegriff des Anspruches 1.

Eine aus der EP 1 584 830 A1 bekannte Kopplungsanordnung verfügt über eine Kupplungsvorrichtung mit einem zu Drehbewegungen um eine Drehachse befähigten Kupplungsgehäuse, und dient zur Herstellung einer Wirkverbindung zwischen einem Antrieb, wie einer Kurbelwelle einer Brennkraftmaschine, und einem Abtrieb, wie einer Getriebeeingangswelle, bei in eingerückter Schaltposition befindlichen Kupplungskomponenten sowie zur Trennung des Abtriebes vom Antrieb bei in ausgerückter Schaltposition befindlichen Kupplungskomponenten. Die Kupplungskomponenten sind in Form eines Kolbens und in Form von antriebsseitigen Kupplungselementen sowie von abtriebsseitigen Kupplungselementen vorgesehen, wobei durch den Kolben eine Abdichtung zwischen einem Druckraum und einem Kühlraum, in welchem die Kupplungselemente aufgenommen sind, herbeigeführt wird. Der Kühlraum ist ebenso wie der Druckraum zur Versorgung mit fluidförmigem Medium über jeweils eine Versorgungsleitung an eine Versorgungsbasis angeschlossen, die an der vom Antrieb abgewandten Seite des Kupplungsgehäuses vorgesehen ist. Jede dieser Versorgungsleitungen der Kupplungsvorrichtung ist mit einer Zuleitung des Getriebes verbunden, eine dem Kühlraum zugeordnete Entsorgungsleitung der Kupplungsvorrichtung dagegen mit einer Ableitung des Getriebes.

Die Versorgungsleitungen für den Druckraum sowie für den Kühlraum und die Entsorgungsleitung für den Kühlraum sind entweder im unmittelbaren radialen Erstreckungsbereich der Drehachse in Form einer in der Getriebeeingangswelle ausgebildeten Mittenbohrung als auch radial dicht ausserhalb der Drehachse in Form von ringförmigen Kanälen realisiert, wobei sich ein erster Kanal radial zwischen einer Kupplungsgehäuse-Nabe und einer in einem das Kupplungsgehäuse umschließenden Getriebegehäuse des Getriebes ortsfesten Stützwelle erstreckt, ein zweiter Kanal dagegen radial zwischen dieser Stützwelle und der Getriebeeingangswelle.

Derartige Kopplungsvorrichtungen, bei denen der Druckraum über eine erste Versorgungsleitung und der Kühlraum über eine zweite Versorgungsleitung mit fluidförmigem Medium aus der Versorgungsbasis befüllbar ist, und der Kühlraum darüber hinaus über eine Entsorgungsleitung für fluidförmiges Medium verfügt, um dieses einer Fluidbevorratung zuzuleiten, wird in Fachkreisen als Drei-Leitungs-System bezeichnet. Die Versorgung der Kopplungsanordnung erfolgt ülicherweise mittels einer durch den Abtrieb, also die Getriebeeingangswelle, angetriebenen Hydraulikpumpe, die demnach als Versorgungsbasis wirksam ist. Somit muss ein zur Versorgung einer als Drei-Leitungs-System ausgebildeten Kupplungsanordnung dienendes Getriebe immer über zwei Zuleitungen für jeweils eine Versorgungsleitung der Kopplungsanordnung und über eine Ableitung für eine Entsorgungsleitung der Kopplungsanordnung verfügen. Derart wirksame Getriebe finden allerdings auf dem KFZ-Gebiet, insbesondere für den Einsatz in Personenfahrzeugen, aus Kostengründen eine eher begrenzte Anwendung. Statt dessen sind die dort vorgesehenen Getriebe üblicherweise für eine Kombination mit einer als Zwei-Leitungs-System ausgebildeten Kopplungsanordnung geeignet, und stellen somit lediglich eine Zuleitung für eine Versorgungsleitung der Kopplungsanordnung sowie eine Ableitung für eine Entsorgungsleitung der Kopplungsanordnung bereit, und zwar unabhängig von der jeweiligen Ausbildung der Kopplungsanordnung, die entweder als hydrodynamischer Drehmomentwandler realisiert sein kann, wie er in der DE 44 23 640 A1 gezeigt ist, oder aber als Kopplungsvorrichtung, wie sie in der DE 101 51 632 A1 behandelt ist. Wesentliches Merkmal, aber auch wesentlicher Nachteil der Zwei-Leitungs-Systeme ist, dass für das fluidförmige Medium stets eine Strömungsverbindung zwischen dem Druckraum und dem Kühlraum besteht, wobei diese Strömungsverbindung bei eingerückter Kopplungsanordnung zwar weniger intensiv als bei ausgerückter Kopplungsanordnung ist, aber dennoch eine schlechtere Regelbarkeit und ein trägeres Verhalten beim Ein- und Ausrücken verbleibt.

Zurückkommend auf die EP 1 584 830 A1, ist bei dieser der Druckraum an der dem Antrieb zugewandten Seite des Kolbens vorgesehen, der Kühlraum dagegen an der vom Antrieb abgewandten Seite des Kolbens. Dadurch bedingt, ist, da die Versorgungsbasis getriebeseitig vorgesehen ist, die Versorgungsleitung für den Druckraum relativ lang, so dass von einem nicht unerheblichen Druckverlust zwischen der Versorgungsbasis und dem Druckraum ausgegangen werden muss. Dies wäre bei einem hydrodynamischen Drehmomentwandler, wie er in der DE 44 23 640 A1 gezeigt ist, wegen des großen Durchmessers des Kolbens und damit dessen großer Druckbeaufschlagungsfläche vielleicht noch tolerierbar, bei einer Kopplungsvorrichtung gemäß der EP 1 584 830 A1 kann dagegen der im Druckraum bereitgestellte Druck für eine zügige Verlagerung des Kolbens zum Einrücken der Kopplungsanordnung schlichtweg unzureichend sein. Also muss durch die Versorgungsbasis ein höheres Druckniveau zur Verfügung gestellt werden, wodurch eine höhere Leistungsanforderung vom Antrieb des Kraftfahrzeuges unvermeidbar erscheint.

Aufs der EP 1 378 679 ist eine Kopplungsanordnung mit einem Getriebe und einer Kupplurigsvorrichtung gemäß dem Oberbegriff des Anspruchs 1 bekannt. Die Kupplungsvorrichtung ist als Doppelkupplung ausgebildet und umfasst für jeden Kupplungsbereich einen durch Fluiddruckzufuhr in einen Druckraum beaufschlagbaren Kupplungskolben. Mit dem Gehäuse der Kupplungsvorrichtung ist eine Kupplungsgehäuse-Nabe fest verbunden, welche in einem Getriebegehäuse zentriert ist. Die Druckfluidzufuhr zum Druckraum erfolgt über Leitungsabschnitte, die teilweise im Getriebegehäuse und teilweise in der Kupplungsgehäuse-Nabe ausgebildet sind.

Der Erfindung liegt die Aufgabe zugrunde, eine Kopplungsanordung derart auszubilden, dass diese unter Vermeidung der bei einem Zwei-Leitungs-System üblichen Nachteile dennoch mit einem Getriebe kombinierbar ist, welches als Zwei-Leitungs-System ausgebildet ist.

Diese Aufgabe wird durch eine Kopplungsanordnung gemäß dem Anspruch 1 gelöst. Durch Ausbildung der Kupplungsvorrichtung der Kupplungsanordnung mit einem Druckraum und einem von diesem durch einen als Kupplungskomponente wirksamen Kolben getrennten, zur Aufnahme wenigstens eines, ebenfalls als Kupplungskomponente dienenden Kupplungselementes, bestimmten Kühlraums sowie durch Anschluss des Druckraumes an eine Versorgungsleitung und des Kühlraumes mit Vorzug an eine Versorgungs- und an eine Entsorgungsleitung, wird dafür gesorgt, dass zum einen der Druckraum für einen kurzfristigen Druckaufbau und damit für eine schnelle Schaltbarkeit und optimale Regelbarkeit des Kolbens und zum anderen der Kühlraum für eine wirksame Wärmeabführung aus dem Reibbereich der Kupplungselemente jeweils umgehend mit fluidförmigem Medium versorgbar ist. Bei den Versorgungsleitungen handelt es sich hierbei um Leitungen, die mit Zuleitungen, die einem Getriebe zugeordnet sind, in Wirkverbindung stehen und mit einer dem Getriebe zugeordneten Versorgungsbasis, oder mit einer von dieser Versorgungsbasis unabhängigen Versorgungsquelle verbunden sind, wobei die Versorgungsbasis ebenso wie die Versorgungsquelle Teile einer durch eine Steuer- und/oder Regeleinheit beeinflussbaren Versorgungseinrichtung sein können. Bei Zuordnung der Versorgungsbasis zum Getriebe wird die Versorgungsbasis beispielsweise durch eine über die Getriebeeingangswelle antreibbare Hydraulikpumpe gebildet werden. Die Entsorgungsleitung ist dagegen mit einer dem Getriebe zugeordneten Ableitung wirkverbunden, die ein Abströmen des eventuell erhitzten fluidförmigen Mediums, vorzugsweise aus dem Kühlraum, in eine Fluidbevorratung ermöglicht, wobei die letztgenannte mit der Versorgungsbasis und/oder mit der Versorgungsquelle wirkverbunden sein kann, mit Vorzug über einen Zwischenkühler für das vom Kühlraum kommende fluidförmige Medium.

Die kurzfristige Versorgung des Druckraumes sowie die ebenfalls kurzfristige Ver- und Entsorgung des Kühlraumes jeweils mit einem hinreichenden Volumenstrom frischen fluidförmigen Mediums erfolgt zugunsten einer zwar einfachen, aber dennoch positiven Ausgestaltung der Kopplungsanordnung sowohl durch vorteilhafte Anordnung der Versorgungsleitungen sowie der Entsorgungsleitung, als auch durch vorteilhafte Positionierung von Druckraum und Kühlraum in Bezug zum Getriebe und damit zu Versorgungsbasis und/oder Versorgungsquelle, was wie folgt begründet wird.

Beginnend mit der Anordnung der Leitungen, wird durch deren erfindungsgemäße Ausgestaltung ermöglicht, dass lediglich zwei Leitungen, beispielsweise eine Versorgungsleitung und eine Entsorgungsleitung, mit den entsprechenden Leitungen eines Getriebes, also mit einer Zu- und einer Ableitung, verbunden werden. Die Ausstattung des Getriebes kann also auf zwei Leitungen begrenzt werden, das Getriebe kann damit jeweils als Zwei-Leitungs-System ausgebildet sein. Eine dritte Leitung, nachfolgend als Beaufschlagungsleitung bezeichnet, ergänzt zwar funktional die beiden vorgenannten Leitungen des Antriebs oder des Getriebes, ist aber unabhängig von diesen beiden Leitungen positioniert und kann auch gegebenenfalls unabhängig von diesen beiden Leitungen mit fluidförmigem Medium versorgt werden. Für eine von den anderen Leitungen unabhängige Versorgung der Beaufschlagungsleitung kann diese mit Vorzug an eine von der Versorgungsbasis der beiden anderen Leitungen unabhängige Versorgungsquelle angeschlossen sein, wobei allerdings die Versorgung der Beaufschlagungsleitung in Zusammenwirkung mit der Ver- oder Entsorgung der beiden anderen Leitungen erfolgen sollte, weshalb die Versorgungsquelle ebenso wie die Versorgungsbasis an die für beide Teile der Versorgungseinrichtung wirksame Steuer- und/oder Regeleinheit angeschlossen sein kann. Alternativ kann allerdings die Beaufschlagungsleitung ebenso wie die beiden anderen Leitungen an eine gemeinsame Versorgungsbasis des Getriebes angeschlossen sein.

Zusammenfassend ist also für die Versorgung der Räume der Kopplungsanordnung von wesentlicher Bedeutung, dass den den Antrieb oder das Getriebe als Zwei-Leitungs-System charakterisierenden Leitungen eine von denselben unabhängige Beaufschlagungsleitung zugeordnet ist. Diese kann allerdings nicht nur funktional getrennt von den beiden anderen Leitungen sein, wie zuvor aufgezeigt wurde, sondern kann darüber hinaus auch räumlich getrennt sein. Mit Vorzug kann beispielsweise zumindest eine der das Getriebe als Zwei-Leitungs-System charakterisierenden Leitungen entweder im unmittelbaren Ersteckungsbereich einer Drehachse der Kopplungsanordnung angeordnet sein, vorzugsweise hierbei im radialen Bereich einer den Abtrieb, also die Getriebeeingangswelle, axial durchdringenden Mittenbohrung, und/oder zumindest eine dieser Leitungen ist radial dicht ausserhalb der Drehachse geführt, mit Vorzug radial zwischen der Getriebeeingangswelle und einer am Getriebe festen Stützwelle und/oder radial zwischen der Stützwelle und einer Kupplungsgehäuse-Nabe der Kopplungsanordnung. Die mit diesen Leitungen verbundene Versorgungs- oder Entsorgungsleitung sind, in räumlicher Zuordnung zu diesen Leitungen, in der Kopplungsanordnung entsprechend positioniert. Hierdurch wird sowohl im Getriebe als auch in der Kopplungsanordnung jeweils eine Konzentrierung der jeweiligen Leitungen in kleinem Radialabstand zur Drehachse der Kopplungsanordnung erzielt, so dass fliehkraftbedingte Strömungsbeeinflussungen minimierbar sind, und zudem für eine kompakte Bauweise der Kopplungsanordnung trotz dieser Leitungen gesorgt ist. Losgelöst von diesen Leitungen ist sowohl die zusätzliche Beaufschlagungsleitung als auch die derselben zugeordnete Versorgungsleitung frei planbar im Getriebe und/oder in der Kopplungsanordnung verlegbar. Mit Vorzug ist die Beaufschlagungsleitung allerdings in das Getriebegehäuse des Getriebes integriert, und damit ortsfest.

Sofern die Versorgungseinheit, insbesondere hierbei die Versorgungsquelle, ebenso wie die Beaufschlagungsleitung an der Kopplungsanordnung an deren dem Getriebe zugewandten Seite vorgesehen ist, ist es von Vorteil, wenn der in vergleichbar kurzer Zeit mit relativ hohem Druck gesteuert oder geregelt zu beaufschlagende Druckraum ebenfalls an der dem Getriebe zugewandten Seite der Kopplungsanordnung vorgesehen ist, da sich hiermit die Erstreckungslänge der entsprechenden Versorgungsleitung verkürzen lässt, und dadurch nicht nur der konstruktive Aufwand der Fluidführung reduziert wird, sondern insbesondere auch die strömungswiderstandsbedingten Verluste verringert sind. Dies wiederum erlaubt eine Ausführung der Versorgungsquelle mit vergleichsweise geringem Leistungsvermögen, weshalb lediglich eine begrenzte Leistung vom Antrieb, also von der Brennkraftmaschine, abgefordert werden muss. Als Folge einer derartigen Anordnung des Druckraumes ist der Kühlraum an der dem Antrieb zugewandten Seite angeordnet, und, sofern der Kühlraum mit einem Torsionsschwingungsdämpfer ausgerüstet ist, auch der letztgenannte.

Die vorliegende Erfindung ist anhand eines Ausführungsbeispieles näher erläutert. Es zeigt:
- Fig.1: ein Prinzip-Schaltbild eines Antriebsstranges mit einem Antrieb, einer Kopplungsanordnung und einem Getriebe;
- Fig. 2: einen Querschnitt durch die Kopplungsanordnung, die in einem Kupplungsgehäuse eine Kupplungsvorrichtung aufweist.

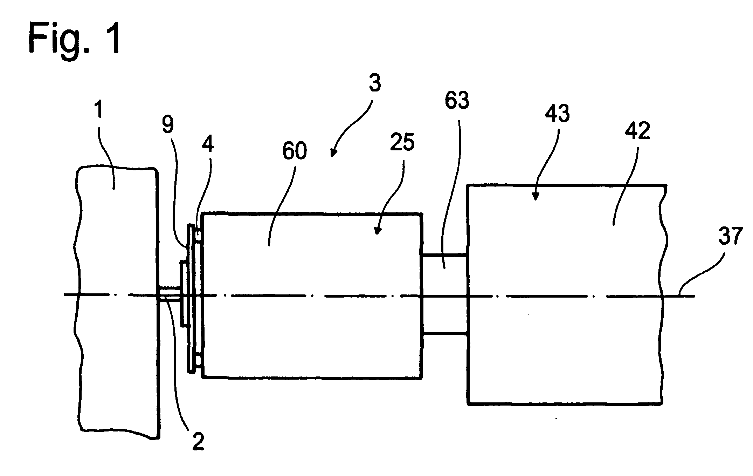

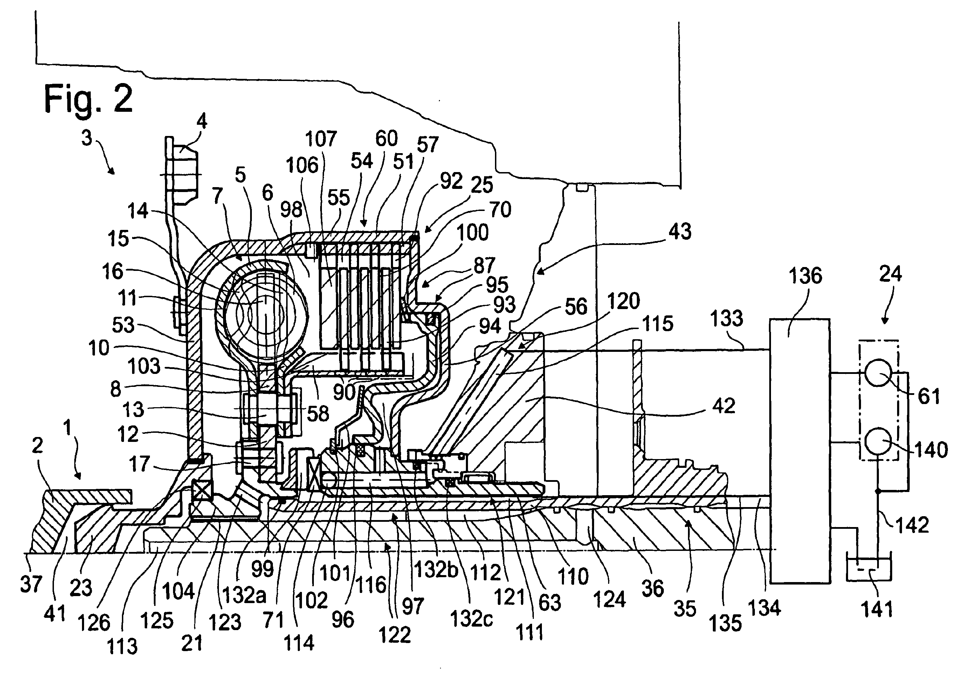

In Fig. 1 ist ein über eine Drehachse 37 verfügender Antriebsstrang 3 mit einer erfindungsgemäßen Kopplungsanordnung 25 schematisch dargestellt. Die Kopplungsanordnung 25 umfasst ein Kupplungsgehäuse 60, das über eine Mehrzahl von Befestigungsorganen 4 und ein Kopplungselement 9, wie z.B. eine Flexplatte, mit einem Antrieb 1, beispielsweise der Kurbelwelle 2 einer Brennkraftmaschine, zur gemeinsamen Drehung gekoppelt werden kann. An der vom Antrieb 1 entfernten Axialseite weist das Kupplungsgehäuse 60 eine Kupplungsgehäuse-Nabe 63 auf, die beispielsweise in ein Getriebe 43 eingreift und dort eine in Fig. 2 nur schematisch gezeigte Versorgungsbasis 140 einer Versorgungseinheit 24 zur Drehung antreibt, wobei die Versorgungseinheit 24 auch mit einer Versorgungsquelle 61 ausgebildet sein kann. Zur Kupplungsgehäuse-Nabe 63 konzentrisch angeordnet ist ein Abtrieb 35 in Form einer Getriebeeingangswelle 36, die mit ihrem freien Ende in das Kupplungsgehäuse 60 ragt.

Fig. 2 zeigt einen dem Kupplungsgehäuse 60 zugeordneten Lagerzapfen 23, der in eine Aushöhlung 41 der Kurbelwelle 2 eingreift. An diesem Lagerzapfen 23 ist eine antriebsseitige Radialgehäusewandung 53 befestigt, die im radial äußeren Bereich in eine Axialgehäusewandung 55 übergeht. Diese Axialgehäusewandung 55 nimmt an ihrem abtriebsseitigen freien Ende eine abtriebsseitige Radialgehäusewandung 56 drehfest und dicht auf, wobei durch die beiden Radialgehäusewandungen 53, 56 und die Axialgehäusewandung 55 das bereits erwähnte Kupplungsgehäuse 60 einer Kupplungsvorrichtung 54 gebildet wird. Die abtriebsseitige Radialgehäuseanordnung 56 ist fest mit einer Kupplungsgehäuse-Nabe 63 verbunden, auf der ein Kolben 94 axial verschiebbar angeordnet ist. Dieser Kolben 94 trennt einen Druckraum 97 der Kupplungsvorrichtung 54 von einen Kühlraum 98 der Kupplungsvorrichtung 54, und ist zur Gewährleistung der gewünschten Dichtigkeit an seinem radial äußeren Rand mit einer Abdichtung 95 versehen, an seinem mit der Kupplungsgehäuse-Nabe 63 zusammen wirkenden radial inneren Rand dagegen mit einer Abdichtung 96. Der Kolben 94 bildet zusammen mit radial äußeren antriebsseitigen Kupplungselementen 92 und radial inneren abtriebsseitigen Kupplungselementen 93 Kupplungskomponenten 87 der Kupplungsvorrichtung 54.

Die antriebsseitigen Kupplungselemente 92 stehen über eine Verzahnung 57 in drehfester Verbindung mit einem antriebsseitigen Kupplungselemententräger 51, der im wesentlichen aus dem Lagerzapfen 23, der antriebsseitigen Radialgehäusewandung 53 und der Axialgehäusewandung 55 gebildet ist. Diese Kupplungselemente 92 sind über einen Reibbereich 70 mit den abtriebsseitigen Kupplungselementen 93 in Wirkverbindung bringbar, wobei die abtriebsseitigen Kupplungselemente 93 über eine Verzahnung 58 drehfest mit einem abtriebsseitigen Kupplungselemententräger 103 der Kupplungsvorrichtung 54 verbunden sind. Der abtriebsseitige Kupplungselemententräger 103 ist über eine Vernietung 13 mit zwei Deckblechen 10, 11 drehfest verbunden, wobei diese Deckbleche 10, 11 über antriebsseitige Ansteuerelemente 14, 15 verfügen, um einen sich in Umfangsrichtung erstreckenden Energiespeichersatz 6 zu beaufschlagen, der sich in Umfangsrichtung anderenends über ein an einer Nabenscheibe 12 vorgesehenes abtriebsseitiges Ansteuerelement 16 abstützt. Die Nabenscheibe 12 ist mittels einer Vernietung 17 an einer Nabe 104 befestigt, die mit einem Stömungsdurchgang 123 ausgebildet ist und über eine Verzahnung 21 in drehfester Verbindung mit der Getriebeeingangswelle 36 steht. Die Nabe 104 vermag sich mittels einer Lagerung 125 sowohl in Axial- als auch in Radialrichtung durch Eingriff in die Aushöhlung 41 am Lagerzapfen 23 und somit antriebsseitig abzustützen. Sie wirkt demnach im Hinblick auf die Getriebeeingangswelle 36 als eine dieselbe zentrierende Pilotlagerung 126.

Durch die Deckbleche 10, 11. von denen das Deckblech 11 den Energiespeichersatz 6 entlang eines größeren Teils seines Umfangs umgreift, wird ein antriebsseitiges Übertragungselement 5 des Torsionsschwingungsdämpfers 7 gebildet, durch die Nabenscheibe 12 dagegen ein abtriebsseitiges Übertragungselement 8 des Torsionsschwingungsdämpfers 7. Der Torsionsschwingungsdämpfer 7 ist bei Torsionsschwingungen wirksam, die vom Antrieb 1 über den antriebsseitigen Kupplungselemententräger 51 und die antriebsseitigen Kupplungselemente 92 auf die abtriebsseitigen Kupplungselemente 93 und von diesen über den abtriebsseitigen Kupplungselemententräger 103 auf die Nabe 104 und damit auf den Abtrieb 35 übertragen werden sollen. Demnach ist die Nabe 104 gleichermaßen als Torsionsschwingungsdämpfer-Nabe und abtriebsseitige Kupplungselemententräger-Nabe funktional wirksam. Außerdem vermag die Nabe 104 über eine in achsrichtung wirksame Lagerung 71, die über einen Strömungsdurchlass 99 verfügt, die Kupplungsgehäuse-Nabe 63 gegenüber dem Antrieb 1 axial zu positionieren, wobei die Kupplungsgehäuse-Nabe 63 von einer Leitung 116 durchdrungen ist, die an ihrem antriebsseitigen Ende mittels eines Verschlusses 114 verschlossen ist. Die Leitung 116 steht mit einer im Getriebegehäuse 42 des Getriebes 43 ausgebildeten Leitung 115 in Verbindung.

Die Kupplungsvorrichtung 54 befindet sich in ihrer Einrückposition, wenn der Kolben 94, der über einen Anlageenergiespeicher 100, der den Einrückvorgang weicher gestalten soll, eine axiale Anpresskraft auf die Kupplungselemente 92, 93 überträgt, so dass diese über ihren Reibbereich 70 in reibschlüssige Verbindung miteinander gelangen und sich über eine Endlamelle 107 an einem Endanschlag 106 abstützen, der durch einen mittels Formschluss in der Axialgehäusewandung 55 axial gesicherten Stützring gebildet ist. Die Kupplungsvorrichtung 54 befindet sich dagegen in ihrer Ausrückposition, wenn die vom Kolben 94 ausgeübte axiale Anpresskraft soweit reduziert ist, dass die am Reibbereich 70 wirksame reibschlüssige Verbindung zwischen den Kupplungselementen 92, 93 zumindest im wesentlichen aufgehoben ist.

Dem Kolben 94 ist ein Axialenergiespeicher 101 zugeordnet, der sich einerends am Kolben 94 und anderenends an einer mit der Kupplungsgehäuse-Nabe 63 festen Halterung 102 abstützt, und der zur Belastung des Kolbens 94 in Richtung zur abtriebsseitigen Radialwandung 56 der Kupplungsvorrichtung 54 dient. Hierdurch soll eine unerwünschte Anlagerung des Kolbens 94 am axial benachbarten Kupplungselement 92 und damit die Aufrechterhaltung einer in Ausrückposition unerwünschten reibschlüssigen Verbindung zwischen den Kupplungselementen 92 und 93, also das Verbleiben einer Momentenübertragung durch die Kupplungsvorrichtung 54, vermieden werden.

Wie Fig. 1 deutlich zeigt, ist abtriebsseitig der Kopplungsanordnung 25 eine Versorgungseinheit 24 vorgesehen, die mit der Kopplungsanordnung 25 zur Ver- oder Entsorgung derselben mit fluidförmigem Medium in Verbindung steht, und zwar über eine Steuer- und/oder Regeleinheit 136. Die Versorgungseinheit 24 verfügt über eine Versorgungsbasis 140, bei welcher es sich um eine dem Getriebe 43 zugeordnete, durch die Getriebeeingangswelle 36 antreibbare Fluidförderpumpe handelt. Ergänzend kann die Versorgungseinheit 24 über eine Versorgungsquelle 61 verfügen, die sowohl räumlich als auch funktional von der Versorgungsstation 140 unabhängig sein kann. Im vorliegenden Fall sind sowohl die Versorgungsstation 140 als auch die Versorgungsquelle 61 getrennt voneinander jeweils über die Steuer- und/oder Regeleinheit 136 mit Leitungen verbunden, wobei der Versorgungsquelle 61 eine Beaufschlagungsleitung 133 zugeordnet ist, der Versorgungsstation 140 dagegen eine Zuleitung 134 vom Getriebe 43 zur Kupplungsvorrichtung 54 sowie eine Ableitung 135 von der Kupplungsvorrichtung 54 zum Getriebe 43. Die Ableitung 135 steht mit einer Fluidbevorratung 141 in Fluidverbindung, wobei die Fluidbevorratung 141 ihrerseits über eine Koppelleitung 142 mit der Versorgungsbasis 140 und/oder mit der Versorgungsquelle 61 in Fluidverbindung steht. Alternativ kann die Versorgungsquelle 61 aber auch über eine von der Fluidbevorratung 141 der Versorgungsstation 140 unabhängige, externe eigene Bevorratung für fluidförmiges Medium verfügen.

Nur bei der Zuleitung 134 sowie bei der Ableitung 135 handelt es sich um dem Getriebe 43 fest zugeordnete Leitungen, so dass das Getriebe 43 als Zwei-Leitungs-System wirksam ist, wobei den beiden Leitungen 134 und 135 konsequenterweise auch lediglich zwei Leitungen in der Kupplungsvorrichtung 54 zugeordnet sind. Es handelt sich hierbei zum einen um eine Versorgungsleitung 121 zur Befüllung des Kühlraums 98 mit fluidförmigem Medium, aufweisend den ersten ringförmigen Kanal 111 zwischen der Kupplungsgehäuse-Nabe 63 und der getriebefesten Stützwelle 110 inklusive des Strömungsdurchlasses 99 für den Kühlraum 98, und zum anderen um eine Entsorgungsleitung 122, aufweisend den zweiten ringförmigen Kanal 112 zwischen der Stützwelle 110 und der Getriebeeingangswelle 36 inklusive des Strömungsdurchganges 123 in der Nabe 104, zur Entsorgung des im Kühlraum 98 enthaltenen fluidförmigen Mediums, alternativ oder ergänzend aber auch um die Mittenbohrung 113 und die Radialverbindung 124 in der Getriebeeingangswelle 36 inklusive der eine Strömungsverbindung zum Kühlraum 98 herstellenden Lagerung 126. Die Beaufschlagungsleitung 133 dagegen ist an eine Versorgungsleitung 120 angeschlossen, die aus den Leitungen 115 und 116 besteht, in den Druckraum 97 mündet und zur Befüllung des letztgenannten dient. Nachfolgend ist zur besseren Unterscheidbarkeit die Versorgungsleitung 120 als erste Versorgungsleitung und die Versorgungsleitung 121 als zweite Versorgungsleitung bezeichnet.

Zur Durchströmung des Kühlraumes 98 der Kupplungsvorrichtung 54 mit fluidförmigem Medium wird die zweite Versorgungsleitung 121 mit der Versorgungsbasis 140 in Strömungsverbindung gesetzt. In den Kühlraum 98 eingetretenes fluidförmiges Medium wird druck- und fliehkraftbedingt nach radial außen gefördert, und durchdringt hierbei, sofern im abtriebsseitigen Kupplungselemententräger 103 Strömungsöffnungen 90 zur Versorgung des Reibbereiches 70 der Kupplungsvorrichtung 54 vorgesehen sind, diese Strömungsöffnungen 90. Bei Ausführung des Kupplungselemententrägers 103 ohne Strömungsöffnungen 90 strömt das fluidförmige Medium statt dessen zumindest im wesentlichen entlang des Kolbens 94 nach radial außen zum Reibbereich 70 der Kupplungsvorrichtung 54. Nach Durchströmung dieses Reibbereiches 70 wird das fluidförmige Medium an der Verzahnung 51 des antriebsseitigen Kupplungselemententrägers 51 zunächst in Achsrichtung und anschließend nach radial innen umgelenkt, um in einen Axialbereich zwischen der antriebsseitigen Radialgehäusewandung 53 des Kupplungsgehäuses 60 und dem antriebsseitigen Deckblech 11 des Torsionsschwingungsdämpfers 7 nach radial innen bis zur Nabe 104 zu gelangen, und dort zum einen die Lagerung 65 zu durchdringen, zum anderen den Strömungsdurchgang 123, und auf diese Weise den Kühlraum 98 wieder zu verlassen. Somit gelangt das fluidförmige Medium über die Entsorgungsleitung 122 über die Ableitung 135 zur Steuer- und/oder Regeleinheit 136, und von dieser in die Fluidbevorratung 141. Von dort aus kann, ggf. nach Zwischenkühlung, das fluidförmige Medium über die Koppelleitung 142 wieder der Versorgungsbasis 140 zugeleitet werden, und steht damit erneut für die Zuleitung 134 und damit zur Befüllung der Versorgungsleitung 121 zur Verfügung.

Abweichend hiervon wird der Druckraum 97 zur Einstellung der Einrückposition an der Kupplungsvorrichtung 54 mit fluidförmigem Medium aus der Versorgungsquelle 61 gespeist, und zwar über die Steuer- und/oder Regeleinheit 136, die Beaufschlagungsleitung 133 und die erste Versorgungsleitung 120. Die Beaufschlagungsleitung 133 ist hierbei ebenso unabhängig von der getriebebezogenen Zuleitung 134 wie die erste Versorgungsleitung 120 von der zweiten Versorgungsleitung 121. Insofern kann eine Drucksteigerung im Druckraum 97 vorgenommen werden, ohne eine der dem Getriebe 43 zugeordneten Leitungen, also die Zuleitung 134 oder die Ableitung 135 nutzen zu müssen. Auch räumlich ist die Beaufschlagungsleitung 133 innerhalb des Getriebegehäuses 42 getrennt von den getriebeinternen Zu- oder Ableitungen 134 und 135, was sich auch auf die Anordnung der mit der Beaufschlagungsleitung 133 zusammen wirkenden ersten Versorgungsleitung 120 innerhalb der Kupplungsvorrichtung 54 fortsetzt. Wie aus Fig.2 erkennbar ist, verläuft die erste Versorgungsleitung 120 mit ihrer Leitung 115 von radial außen kommend weit in Richtung nach radial innen, um mit ihrem radial inneren Ende dennoch radial außerhalb der zweiten Versorgungsleitung 121 oder der Entsorgungsleitung 122 zu verbleiben.

Selbstverständlich müssen die einzelnen Versorgungsleitungen 120 und 121 gegeneinander, aber auch gegenüber der Entsorgungsleitung 122 flüssigkeitsdicht isoliert sein, weshalb an den entsprechenden Stellen Abdichtungen 132a bis 132c vorgesehen sind. Fig. 2 zeigt eine erste Abdichtung 132a radial zwischen der Stützwelle 110 und der Nabe 104 des Torsionsschwingungsdämpfers 7 und/oder des abtriebsseitigen Kupplungselemententrägers 103. Weiterhin sind zweite Dichtungen 132b und 132c vorgesehen, die jeweils radial zwischen der Kupplungsgehäuse-Nabe 63 und dem Getriebegehäuse 42 des Getriebes 43 angeordnet sind. Die Dichtung 132b wirkt hierbei im wesentlichen gegen einen Verlust fluidförmigen Mediums nach radial außen, die Dichtung 132 c dagegen im wesentlichen in Achsrichtung.

Fig. 2 zeigt weiterhin, dass die Kupplungsanordnung 25, abweichend von den aus dem Stand der Technik, wie der eingangs zitierten EP 1 584 830 A1 bekannten Lösungen, über eine bezüglich Antrieb 1 und Abtrieb 35 seitenverkehrte Einbaulage verfügt. Hierdurch ergibt sich, da die Versorgungseinheit 24 abtriebsseitig angeordnet ist, eine sehr kurze erste Versorgungsleitung 120 zwischen der Versorgungseinheit 24 und dem Druckraum 97und damit überaus geringe Verluste in der ersten Versorgungsleitung, so dass auch radial kleine Kolben 94 rasch und feinfühlig bewegbar zum Einrücken der Kupplungsvorrichtung 54 beaufschlagbar sind. Außerdem ergeben sich durch diese Einbaulage Vorteile bei der Zentrierung des Torsionsschwingungsdämpfers 7 sowie des abtriebsseitigen Kupplungselemententrägers 103 gegenüber dem Antrieb 1.

### Bezugszeichenliste

- 1: Antrieb
- 2: Kurbelwelle
- 3: Antriebsstrang
- 4: Befestigungsorgane
- 5: antriebsseitiges Übertragungselement
- 6: Energiespeichersatz
- 7: Torsionsschwingungsdämpfer
- 8: abtriebsseitiges Übertragungselement
- 9: Kopplungselement
- 10, 11: Deckbleche
- 12: Nabenscheibe
- 13: Vernietung
- 14: Ansteuerelement
- 15: Ansteuerelement
- 16: Anstuerelement
- 17: Vernietung
- 21: Verzahnung
- 23: Lagerzapfen
- 24: Versorgungseinheit
- 25: Kopplungsanordnung
- 35: Abtrieb
- 36: Getriebeeingangswelle
- 37: Drehachse
- 41: Aushöhlung
- 42: Getriebegehäuse
- 43: Getriebe
- 51: antriebsseitiger Kupplungselemententräger
- 53: antriebsseitige Radialgehäusewandung
- 54: Kupplungsvorrichtung
- 55: Axialgehäusewandung
- 56: abtriebsseitige Radialgehäusewandung
- 57: Verzahnung
- 58: Verzahnung
- 60: Kupplungsgehäuse
- 61: Versorgungsquelle
- 63: Kupplungsgehäuse-Nabe
- 70: Reibbereich
- 71: Axiallagerung
- 87: Kupplungskomponenten
- 90: Strömungsöffnungen
- 92: antriebsseitiges Kupplungselement
- 93: abtriebsseitiges Kupplungselement
- 94: Kolben
- 95, 96: Abdichtungen
- 97: Druckraum
- 98: Kühlraum
- 99: Strömungsdurchlass

- 100: Anlegeenergiespeicher
- 101: Axialenergiespeicher
- 102: Halterung
- 103: abtriebsseitiger Kupplungselemententräger
- 104: Nabe
- 106: Endanschlag
- 107: Endlamelle
- 110: Stützwelle
- 111: erster ringförmiger Kanal
- 112: zweiter ringförmiger Kanal
- 113: Mittenbohrung
- 114: Verschluss
- 115,116: Leitung
- 120: erste Versorgungsleitung
- 121: zweite Versorgungsleitung
- 122: Entsorgungsleitung
- 123: Strömungsdurchgang
- 124: Radialverbindung
- 125: Lagerung
- 126: Pilotlagerung
- 132a bis c: Dichtung
- 133: Beaufschlagungsleitung
- 134: Zuleitung
- 135: Ableitung
- 136: Steuer- und/oder Regeleinheit
- 140: Versorgungsbasis
- 141: Fluidbevorratung
- 142: Koppelleitung

## Patentansprüche

1. Kopplungsanordnung mit einem Getriebe (43) mit Getriebegehäuse (42) und Getriebeeingangswelle (36) und mit einer Kupplungsvorrichtung (54), aufweisend ein zu Drehbewegungen um eine Drehachse befähigtes Kupplungsgehäuse (60) und vorgesehen zur Herstellung einer Wirkverbindung zwischen einem Antrieb (1) und der Getriebeeingangswelle (36) bei in eingerückter Schaltposition befindlichen Kupplungskomponenten (92, 93, 94) sowie zur Trennung der Getriebeeingangswelle (36) vom Antrieb (1) bei in ausgerückter Schaltposition befindlichen Kupplungskomponenten (92, 93, 94), wobei die Kupplungskomponenten in Form wenigstens eines Kolbens (94) sowie zumindest eines Kupplungselementes (92, 93) vorgesehen sind, durch den Kolben (94) eine zumindest wesentliche Abdichtung zwischen einem Druckraum (97) und einem Kühlraum (98), in welchem das zumindest eine Kupplungselement (92, 93) aufgenommen ist, herbeigeführt ist, und der Druckraum (97) und der Kühlraum (98) zur Versorgung mit fluidförmigem Medium an eine dem Getriebe (43) zugeordnete. Versorgungseinheit (24) angeschlossen ist, indem zumindest eine Versorgungsleitung (120, 121) der Kupplungsvorrichtung (54) mit einer Zuleitung (134) des Getriebes (43) und zumindest eine Entsorgungsleitüng (122) der Kupplungsvorrichtung (54) mit einer Ableitung (135) des Getriebes (43) verbunden ist, wobei der Kupplungsvorrichtung (54) weiterhin eine Beaufschlagungsleitung (133) für eine zum Druckraum (97) führende erste Versorgungsleitung (120) zugeordnet ist, wobei die Beaufschlagungsleitung (133) von der dem Getriebe (43) zugeordneten Zuleitung (134) für eine zum Kühlraum (98) führende zweite Versorgungsleitung (121) oder der dem Getriebe (43) zugeordneten Ableitung (135) für eine vom Kühlraum (98) weg führende Entsorgungsleitung (122) unabhängig ist, wobei eine getriebeseitige Radialgehäusewandung (56) über eine Kupplungsgehäuse-Nabe (63) verfügt, die im Getriebegehäuse (42) zentriert ist und eine in das Getriebegehäuse (42) integrierte Leitung (115) gemeinsam mit einer in der Kupplungsgehäuse-Nabe (63) ausgebildeten Leitung (116) die erste Versorgungsleitung (120) bildet,
**dadurch gekennzeichnet,**
**dass** die Kupplungsgehäuse-Nabe (63) eine Stützwelle (110) der Kupplungsvorrichtung (54) unter Bildung eines einen Teil der zweiten Versorgungsleitung (121) bereitstellenden ersten ringförmigen Kanals (111) umschließt, und
**dass** die Stützwelle (110) unter Bildung eines einen Teil der Entsorgungsleitung (122) bereitstellenden zweiten ringförmigen Kanals (112) die Getriebeeingangswelle (36) umschließt.

2. Kopplungsanordnung nach Anspruch 1,
**dadurch gekennzeichnet,**
**dass** die Beaufschlagungsleitung (133) an eine Versorgungsquelle (61) der Versorgungseinheit (24) angeschlossen ist, und mittels einer Steuer- und/oder Regeleinheit (136) von der dem Getriebe (43) zugeordneten, ebenfalls der Versorgungseinheit (24) zugehörenden Versorgungsbasis (140) unabhängig betreibbar ist.

3. Kopplungsanordnung nach Anspruch 1,
**dadurch gekennzeichnet,**
**dass** die Beaufschlagungsleitung (133) an eine Versorgungsquelle (61) angeschlossen ist, die über die Steuer- und/oder Regeleinheit (136) mit der dem Getriebe (43) zugeordneten Versorgungsbasis (140) koppelbar ist.

4. Kopplungsanordnung nach Anspruch 1, 2 oder 3,
**dadurch gekennzeichnet,**
**dass** die Beaufschlagungsleitung (133) räumlich getrennt von der dem Getriebe (43) zugeordneten Zuleitung (134) oder der ebenfalls dem Getriebe (43) zugeordneten Ableitung (136) angeordnet ist.

5. Kopplungsanordnung nach Anspruch 4,
**dadurch gekennzeichnet,**
**dass** sich aus der räumlichen Trennung der Beaufschlagungsleitung (133) von der dem Getriebe (43) zugeordneten Zuleitung (134) oder der ebenfalls dem Getriebe (43) zugeordneten Ableitung (135) eine räumliche Trennung der ersten Versorgungsleitung (120) der Kupplungsvorrchtung (54) gegenüber deren zweiter Versorgungsleitung (121) sowie gegenüber deren Entsorgungsleitung (122) ergibt.

6. Kopplungsanordnung nach einem der Ansprüche 1 bis 5,
**dadurch gekennzeichnet,**
**dass** die Positionierung der ersten Versorgungsleitung (120) frei planbar ist, während die zweite Versorgungsleitung (121) ebenso wie die Entsorgungsleitung (122), 122) im unmittelbaren radialen Erstreckungsbereich der Drehachse (37) oder radial dicht ausserhalb dieses Erstreckungsbereiches verläuft.

7. Kopplungsanordnung nach einem der Ansprüche 1 bis 6,
**dadurch gekennzeichnet,**
**dass** der Druckraum (97) und der Kühlraum (98) der Kupplungsvorrichtung (54) mit unterschiedlichen Abständen gegenüber der Versorgungsquelle (61) angeordnet sind, wobei dem zur Versorgungsquelle (61) näheren Raum (98) die erste Verbindungsleitung (120) zugeordnet ist, dem gegenüber der Versorgungsquelle (61) ferneren Raum (97) dagegen die zweite Versorgungsleitung (121).

8. Kopplungsanordnung nach einem der Ansprüche 1 bis 7 mit einer Versorgungsquelle, die an der vom Antrieb abgewandten Seite des Kpplungsgehäuses vorgesehen ist;
**dadurch gekennzeichnet,**
**dass** der Druckraum (97) der Kupplungsvorrichtung (54) mit geringerem Abstand gegenüber der Versorgungsquellebasis (61) angeordnet ist als der Kühlraum (98) der Kupplungsvorrichtung (54), und dem Druckraum (97) die erste Versorgungsleitung (120) zugeordnet ist und dem Kühlraum (98) dagegen die zweite Versorgurlgsleiturlg (120).

9. Kopplungsanordnung nach einem der Ansprüche 1 bis 8 mit einem antriebsseitigen Kupplungselemententräger zur drehfesten Anbindung antriebsseitiger Kupplungselemente an den Antrieb und mit einem gegenüber dem Abtrieb drehfesten abtriebsseitigen Kupplungselemententräger zur Anbindung abtriebsseitiger Kupplungselemente an den Abtrieb,
**dadurch gekennzeichnet,**
**dass** das Kupplungsgehäuse (60) über einen Lagerzapfen (23) verfügt, über welchen eine Nabe (104) des abtriebsseitigen Kupplungselemententrägers (103) zentrierend aufgenommen ist.

10. Kopplungsanordnung nach Anspruch 9,
**dadurch gekennzeichnet,**
**dass** der abtriebsseitige Kupplungselemententräger (103) der Kupplungsvorrichtung (54) über eine Lagerung (65) gegenüber dem Lagerzapfen (23) des Kupplungsgehäuses (60) zentriert ist.

11. Kopplungsanordnung nach einem der Ansprüche 9 oder 10,
**dadurch gekennzeichnet,**
**dass** der abtriebsseitige Kupplungselemententräger (103) der Kupplungsvorrichtung (54) über einen Torsionsschwingungsdämpfer (7) an einer Nabe (104) des abtriebsseitigen Kupplungselemententrägers (103) angreift.

12. Kopplungsanordnung nach Anspruch 11,
**dadurch gekennzeichnet,**
**dass** der dem abtriebsseitigen Kupplungselemententräger (103) der Kupplungsvorrichtung (54) zugeordnete Torsionsschwingungsdampfer (7) an der dem Antrieb (1) zugewandten Seite des zumindest einen Kupplungselementes (92, 93) angeordnet ist, der Kolben (94) dagegen, an der vom Antrieb (1) abgewandten Seite des Kupplungselementes (92, 93).

13. Kopplungsanordnung nach einem der Ansprüche 9 bis 12, bei welcher das Kupplungsgehäuse eine antriebsseitige Radialgehäusewandung, eine radial äußeren Axialgehäusewandung und eine abtriebsseitige Radialgehäusewandung aufweist,
**dadurch gekennzeichnet,**
**dass** die antriebsseitige Radialgehäusewandung (53) an dem Lagerzapfen (23) des Kupplungsgehäuses (60) zentriert aufgenommen ist.

14. Kopplungsanordnung nach Anspruch 13,
**dadurch gekenntzeichnet**
**dass** die Axialgehäusewandung (55) mit einer Verzahnung (57) zur drehfesten Aufnahme der antriebsseitigen Kupplungselemente (92) ausgebildet ist.

15. Kopplungsanordnung nach einem der Ansprüche 13 oder 14,
**dadurch gekennzeichnet,**
**dass** bei der Kupplungsvorrichtung (54) der Kolben (94) gemeinsam mit der antriebsseitigen Radialgehäusewandung (53) den Kühlraum (98) und gemeinsam mit der abtriebsseitigen Radialgehäusewandung (56) den Druckraum (97) axial begrenzt.

16. Kopplungsanordnung nach einem der Ansprüche 1 bis 15,
**dadurch gekennzeichnet,**
**dass** der Kolben (94) der Kupplungsvorrichtung (54) an der Kupplungsgehäuse-Nabe (63) axial verlagerbar aufgenommen ist, und dem Kolben (94) wenigstens ein den Ausrückvorgang unterstützender Axialenergiespeicher (101) zugeordnet ist, der sich an der Kupplungsgehäuse-Nabe (63) abstützt.

17. Kopplungsanordnung nach einem der Ansprüche 1 bis 16,
**dadurch gekennzeichnet,**
**dass** die in der Kupplungsgehäuse-Nabe (63) ausgebildete Leitung (116) an ihrem antriebsseitigen Ende mit einem Verschluss (114) ausgebildet ist.

18. Kopplungsanordnung nach einem der Ansprüche 1 bis 17,
**dadurch gekennzeichnet,**
**dass** der zwischen der Kupplungsgehäuse-Nabe (63) und der Stützwelle (110) der Kupplungsvorrichtung (54) verlaufende, erste ringförmige Kanal (111) als zweite Versorgungsleitung (121) dient.

19. Kopplungsanordnung nach einem der Ansprüche 1 bis 18,
**dadurch gekennzeichnet,**
**dass** der zwischen der Stützwelle (110) der Kupplungsvorrichtung (54) und der Getriebeeingangswelle (36) verlaufende, zweite ringförmige Kanal (112) gemeinsam mit einer die Nabe (104) des abtriebsseitigen Kupplungselemententrägers (103) der Kupplungsvorfichturig (54) durchdringenden Leitung (123) als Entsorgungsleitung (122) vorgesehen ist.

20. Kopplungsanordnung nach einem der Ansprüche 1 bis 19 mit einer in der Getriebeeingangswelle ausgebildeten Mittenbohrung,
**dadurch gekennzeichnet,**
**dass** die Mittenbohrung (113) der Getriebeeingangswelle (36) gemeinsam mit einer in der Getriebeeingangswelle (36) vorgesehenen Radialverbindung (124) als weiterer Teil der zweiten Versorgungsleitung (121) dient.

21. Kopplungsanordnung nach einem der Ansprüche 1 bis 20,
**dadurch gekennzeichnet,**
**dass** die einzelnen Versorgungsleitungen (120, 121) untereinander sowie gegenüber der Entsorgungsleitung (122) durch zumindest jeweils eine Dichtung (132a, 132b, 132c) voneinander isoliert sind.

22. Kopplungsanordnung nach Anspruch 21 und Anspruch 11,
**dadurch gekennzeichnet,**
**dass** eine erste Dichtung (132a) radial zwischen der Stützwelle (110) und der Nabe (104) des Torsionsschwingungsdämpfers (7) und/oder des abtriebsseitigen Kupplungselemententrägers (103) angeordnet ist.

23. Kopplungsanordnung nach Anspruch 21 oder 22,
**dadurch gekennzeichnet,**
**dass** zweite Dichtungen (132b, 132c) jeweils radial zwischen der Kupplungsgehäuse-Nabe (63) und dem Getriebegehäuse (42) des Getriebes (43) angeordnet sind.

24. Kopplungsanordnung nach Anspruch 9 oder einem der Ansprüche 10 bis 23 sofern Anspruch 9 rückbezogen,
**dadurch gekennzeichnet,**
**das** der Lagerzapfen (23) über eine Aushöhlung (41) verfügt, die zur. Aufnahme der Getriebeeingangswelle (36) vorgesehen ist.

## Claims

1. Coupling arrangement having a transmission (43) with a transmission housing (42) and a transmission input shaft (36), and having a clutch apparatus (54), having a clutch housing (60) which is capable of rotational movements about a rotational axis and provided for producing an operative connection between a drive (1) and the transmission input shaft (36) when clutch components (92, 93, 94) are situated in the engaged switching position, and for disconnecting the transmission input shaft (36) from the drive (1) when clutch components (92, 93, 94) are situated in the disengaged switching position, the clutch components being provided in the form of at least one piston (94) and at least one clutch element (92, 93), an at least substantial sealing action being brought about by the piston (94) between a pressure space (97) and a cooling space (98), in which the at least one clutch element (92, 93) is accommodated, and the pressure space (97) and the cooling space (98) being connected for supply with fluidic medium to a supply unit (24) which is assigned to the transmission (43), by at least one supply line (120, 121) of the clutch apparatus (54) being connected to a feed line (134) of the transmission (43) and at least one disposal line (122) of the clutch apparatus (54) being connected to a discharging line (135) of the transmission (43), the clutch apparatus (54) being assigned, furthermore, a loading line (133) for a first supply line (120) which leads to the pressure space (97), the loading line (133) being independent of the feed line (134) which is assigned to the transmission (43) for a second supply line (121) which leads to the cooling space (98) or being independent of the discharging line (135) which is assigned to the transmission (43) for a disposal line (122) which leads away from the cooling space (98), a transmission-side radial housing wall (56) having a clutch-housing hub (63) which is centred in the transmission housing (42), and a line (115) which is integrated into the transmission housing (42) forming the first supply line (120) together with a line (116) which is formed in the clutch-housing hub (63), **characterized in that** the clutch-housing hub (63) encloses a supporting shaft (110) of the clutch apparatus (54) with the formation of a first annular channel (111) which provides a part of the second supply line (121), and **in that** the supporting shaft (110) encloses the transmission input shaft (36) with the formation of a second annular channel (112) which provides a part of the disposal line (122).

2. Coupling arrangement according to Claim 1, **characterized in that** the loading line (133) is connected to a supply source (61) of the supply unit (24) and can be operated by means of a control and/or regulating unit (136) independently of the supply base (140) which is assigned to the transmission (43) and likewise belongs to the supply unit (24).

3. Coupling arrangement according to Claim 1, **characterized in that** the loading line (133) is connected to a supply source (61) which can be coupled via the control and/or regulating unit (136) to the supply base (140) which is assigned to the transmission (43) .

4. Coupling arrangement according to Claim 1, 2 or 3, **characterized in that** the loading line (133) is arranged spatially separately from the feed line (134) which is assigned to the transmission (43) or from the discharging line (135) which is likewise assigned to the transmission (43).

5. Coupling arrangement according to Claim 4, **characterized in that** the result of the spatial separation of the loading line (133) from the feed line (134) which is assigned to the transmission (43) or the discharging line (135) which is likewise assigned to the transmission (43) is a spatial separation of the first supply line (120) of the clutch apparatus (54) with respect to its second supply line (121) and with respect to its disposal line (122).

6. Coupling arrangement according to one of Claims 1 to 5, **characterized in that** the positioning of the first supply line (120) can be planned freely, while the second supply line (121), just like the disposal line (122) extends in the immediate radial extent region of the rotational axis (37) or radially closely outside this extent region.

7. Coupling arrangement according to one of Claims 1 to 6, **characterized in that** the pressure space (97) and the cooling space (98) of the coupling apparatus (54) are arranged at different spacings from the supply source (61), the space (98) which is closer to the supply source (61) being assigned the first connecting line (120), and in contrast the space (97) which is further away from the supply source (61) being assigned the second supply line (121).

8. Coupling arrangement according to one of Claims 1 to 7 with a supply source which is provided on that side of the clutch housing which faces away from the drive, **characterized in that** the pressure space (97) of the clutch apparatus (54) is arranged at a smaller spacing from the supply-source base (61) than the cooling space (98) of the clutch apparatus (54), and the pressure space (97) is assigned the first supply line (120) and, in contrast, the cooling space (98) is assigned the second supply line (120).

9. Coupling arrangement according to one of Claims 1 to 8 with a drive-side clutch-element carrier for the rotationally fixed attachment of drive-side clutch elements to the drive and with an output-side clutch-element carrier which is fixed with respect to the output so as to rotate with it, for the attachment of output-side clutch elements to the output, **characterized in that** the clutch housing (60) has a bearing journal (23), via which a hub (104) of the output-side clutch-element carrier (103) is received in a centring manner.

10. Coupling arrangement according to Claim 9, **characterized in that** the output-side clutch-element carrier (103) of the clutch apparatus (54) is centred via a mounting (65) with respect to the bearing journal (23) of the clutch housing (60).

11. Coupling arrangement according to either of Claims 9 and 10, **characterized in that** the output-side clutch-element carrier (103) of the clutch apparatus (54) acts via a torsional vibration damper (7) on a hub (104) of the output-side clutch-element carrier (103).

12. Coupling arrangement according to Claim 11, **characterized in that** the torsional vibration damper (7) which is assigned to the output-side clutch-element carrier (103) of the clutch apparatus (54) is arranged on that side of the at least one clutch element (92, 93) which faces the drive (1), and in contrast the piston (94) is arranged on that side of the clutch element (92, 93) which faces away from the drive (1).

13. Coupling arrangement according to one of Claims 9 to 12, in which the clutch housing has a drive-side radial housing wall, a radially outer axial housing wall and an output-side radial housing wall, **characterized in that** the drive-side radial housing wall (53) is received in a centred manner on the bearing journal (23) of the clutch housing (60).

14. Coupling arrangement according to Claim 13, **characterized in that** the axial housing wall (55) is configured with a toothing system (57) for the rotationally fixed receiving of the drive-side clutch elements (92).

15. Coupling arrangement according to either of Claims 13 and 14, **characterized in that**, in the clutch apparatus (54), the piston (94) axially delimits the cooling space (98) together with the drive-side radial housing wall (53) and axially delimits the pressure space (97) together with the output-side radial housing wall (56).

16. Coupling arrangement according to one of Claims 1 to 15, **characterized in that** the piston (94) of the clutch apparatus (54) is received axially displaceably on the clutch-housing hub (63), and the piston (94) is assigned at least one axial energy accumulator (101) which assists the disengagement operation and is supported on the clutch-housing hub (63).

17. Coupling arrangement according to one of Claims 1 to 16, **characterized in that** the line (116) which is formed in the clutch-housing hub (63) is formed with a closure (114) at its drive-side end.

18. Coupling arrangement according to one of Claims 1 to 17, **characterized in that** the first annular channel (111) which extends between the clutch-housing hub (63) and the supporting shaft (110) serves as second supply line (121).

19. Coupling arrangement according to one of Claims 1 to 18, **characterized in that** the second annular channel (112) which extends between the supporting shaft (110) of the clutch apparatus (54) and the transmission input shaft (36) is provided as disposal line (122) together with a line (123) which penetrates the hub (104) of the output-side clutch-element carrier (103) of the clutch apparatus (54).

20. Coupling arrangement according to one of Claims 1 to 19 with a centre bore which is formed in the transmission input shaft, **characterized in that** the centre bore (113) of the transmission input shaft (36) serves as a further part of the second supply line (121) together with a radial connection (124) which is provided in the transmission input shaft (36).

21. Coupling arrangement according to one of Claims 1 to 20, **characterized in that** the individual supply lines (120, 121) are insulated from one another among one another and with respect to the disposal line (122) by at least in each case one seal (132a, 132b, 132c).

22. Coupling arrangement according to Claim 21 and Claim 11, **characterized in that** a first seal (132a) is arranged radially between the supporting shaft (110) and the hub (104) of the torsional vibration damper (7) and/or of the output-side clutch-element carrier (103).

23. Coupling arrangement according to Claim 21 or 22, **characterized in that** second seals (132b, 132c) are arranged in each case radially between the clutch-housing hub (63) and the transmission housing (42) of the transmission (43).

24. Coupling arrangement according to Claim 9 or one of Claims 10 to 23 as far as they are referred back to Claim 9, **characterized in that** the bearing journal (23) has a cavity (41) which is provided for receiving the transmission input shaft (36).

## Revendications

1. Agencement d'accouplement comprenant une boîte de vitesses (43) avec un carter de boîte de vitesses (42) et un arbre d'entrée de boîte de vitesses (36) et un dispositif d'embrayage (54), présentant un carter d'embrayage (60) capable d'effectuer des mouvements de rotation autour d'un axe de rotation et prévu pour l'établissement d'une liaison active entre un entraînement (1) et l'arbre d'entrée de boîte de vitesses (36) dans le cas de composants d'embrayage (92, 93, 94) se trouvant dans la position de changement de vitesse embrayée et pour la séparation de l'arbre d'entrée de boîte de vitesses (36) de l'entraînement (1) dans le cas de composants d'embrayage (92, 93, 94) se trouvant dans la position de changement de vitesse débrayée, les composants d'embrayage étant prévus sous la forme d'au moins un piston (94) et d'au moins un élément d'embrayage (92, 93), une étanchéité au moins essentielle étant établie par le piston (94) entre un espace de pression (97) et un espace de refroidissement (98), dans lequel le au moins un élément d'embrayage (92, 93) est réceptionné, et l'espace de pression (97) et l'espace de refroidissement (98) étant raccordés pour l'alimentation avec un milieu fluide à une unité d'alimentation (24) attribuée à la boîte de vitesses (43), du fait qu'au moins une conduite d'alimentation (120, 121) du dispositif d'embrayage (54) est reliée à une conduite d'arrivée (134) de la boîte de vitesses (43) et au moins une conduite d'évacuation (122) du dispositif d'embrayage (54) est reliée à une conduite d'évacuation (135) de la boîte de vitesses (43), une conduite d'alimentation (133) destinée à une première conduite d'alimentation (120) allant à l'espace de pression (97) étant attribuée au dispositif d'embrayage (54), la conduite d'alimentation (133) étant indépendante de la conduite d'arrivée (134) attribuée à la boîte de vitesses (43) pour une seconde conduite d'alimentation (121) allant à l'espace de refroidissement (98) ou de la conduite d'évacuation (135) attribuée à la boîte de vitesses (43) pour une conduite d'évacuation (122) partant de l'espace de refroidissement (98), une paroi de carter radial (56) côté boîte de vitesses disposant d'un moyeu de carter d'embrayage (63), qui est centré dans le carter de boîte de vitesses (42) et une conduite (115) intégrée dans le carter de boîte de vitesses (42) formant la première conduite d'alimentation (120) conjointement avec une conduite (116) formée dans le moyeu de carter d'embrayage (63),
**caractérisé**
**en ce que** le moyeu de carter d'embrayage (63) entoure un arbre de soutien (110) du dispositif d'embrayage (54) en formant un premier canal (111) de forme annulaire fournissant une partie de la seconde conduite d'alimentation (121), et
**en ce que** l'arbre de soutien (110) entoure l'arbre d'entrée de boîte de vitesses (36) en formant un second canal (112) de forme annulaire mettant à disposition une partie de la conduite d'évacuation (122).

2. Dispositif d'accouplement selon la revendication 1,
**caractérisé en ce que**
la conduite d'alimentation (133) est raccordée à une source d'alimentation (61) de l'unité d'alimentation (24), et peut être exploitée au moyen d'une unité de commande et/ou de réglage (136) indépendamment de la base d'alimentation (140) attribuée à la boîte de vitesses (43) également attribuée à l'unité d'alimentation (24).

3. Dispositif d'accouplement selon la revendication 1,
**caractérisé en ce que**
la conduite d'alimentation (133) est raccordée à une source d'alimentation (61), laquelle peut être couplée par l'unité de commande et/ou de réglage (136) à la base d'alimentation (140) attribuée à la boîte de vitesses (43).

4. Dispositif d'accouplement selon la revendication 1, 2 ou 3,
**caractérisé en ce que**
la conduite d'alimentation (133) est disposée séparée dans l'espace de la conduite d'arrivée (134) attribuée à la boîte de vitesses (43) ou de la conduite d'évacuation (135) attribuée également à la boîte de vitesses (43).

5. Dispositif d'accouplement selon la revendication 4,
**caractérisé en ce que**
une séparation dans l'espace de la première conduite d'alimentation (120) du dispositif d'embrayage (54) par rapport à sa seconde conduite d'alimentation (121) et par rapport à sa conduite d'évacuation (122) découle de la séparation dans l'espace de la conduite d'alimentation (133) de la conduite d'arrivée (134) attribuée à la boîte de vitesses (43) ou de la conduite d'évacuation (135) attribuée également à la boîte de vitesses (43).

6. Dispositif d'accouplement selon l'une quelconque des revendications 1 à 5,
**caractérisé en ce que**
la position de la première conduite d'alimentation (120) peut être planifiée librement, alors que la seconde conduite d'alimentation (121) de même que la conduite d'évacuation (122) s'étendent dans la zone d'extension radiale immédiate de l'axe de rotation (37) ou radialement de façon étanche à l'extérieur de cette zone d'extension.

7. Dispositif d'accouplement selon l'une quelconque des revendications 1 à 6,
**caractérisé en ce que**
l'espace de pression (97) et l'espace de refroidissement (98) du dispositif d'embrayage (54) sont disposés avec des espacements différents par rapport à la source d'alimentation (61), la première conduite de liaison (120) étant attribuée à l'espace (98) plus proche de la source d'alimentation (61), la seconde conduite d'alimentation (121) étant attribuée en revanche à l'espace (97) plus éloigné par rapport à la source d'alimentation (61).

8. Dispositif d'accouplement selon l'une quelconque des revendications 1 à 7 comprenant une source d'alimentation, qui est prévue sur le côté, opposé à l'entraînement, du carter d'embrayage, **caractérisé en ce que**
l'espace de pression (97) du dispositif d'embrayage (54) est disposé à une distance plus faible par rapport à la base de la source d'alimentation (61) que l'espace de refroidissement (98) du dispositif d'embrayage (54), et la première conduite d'alimentation (120) est attribuée à l'espace de pression (97) et la seconde conduite d'alimentation (120) est attribuée en revanche à l'espace de refroidissement (98).

9. Dispositif d'accouplement selon l'une quelconque des revendications 1 à 8 comprenant un support d'élément d'embrayage côté entraînement pour le rattachement solidaire en rotation d'éléments d'embrayage côté entraînement à l'entraînement et comprenant un support d'élément d'embrayage côté sortie, solidaire en rotation par rapport à la sortie, pour le rattachement d'éléments d'embrayage côté sortie à la sortie,
**caractérisé en ce que**
le carter d'embrayage (60) dispose d'un tourillon (23), par lequel un moyeu (104) du support d'élément d'embrayage (103) côté sortie est réceptionné de façon centrée.

10. Dispositif d'accouplement selon la revendication 9,
**caractérisé en ce que**
le support d'élément d'embrayage (103) côté sortie du dispositif d'embrayage (54) est centré au moyen d'une fixation (65) par rapport au tourillon (23) du carter d'embrayage (60).

11. Dispositif d'accouplement selon l'une quelconque des revendications 9 ou 10,
**caractérisé en ce que**
le support d'élément d'embrayage (103) côté sortie du dispositif d'embrayage (54) s'applique au moyen d'un amortisseur de vibrations de torsion (7) sur un moyeu (104) du support d'élément d'embrayage (103) côté sortie.

12. Dispositif d'accouplement selon la revendication 11,
**caractérisé en ce que**
l'amortisseur de vibrations de torsion (7) attribué au support d'élément d'embrayage (103) côté sortie du dispositif d'embrayage (54) est disposé sur le côté, tourné vers l'entraînement (1), du au moins un élément d'embrayage (92, 93), alors que le piston (94) est disposé en revanche sur le côté, opposé à l'entraînement (1), de l'élément d'embrayage (92, 93).

13. Dispositif d'accouplemet selon l'une quelconque des revendications 9 à 12, dans lequel le carter d'embrayage présente une paroi de carter radial côté entraînement, une paroi de carter axial radialement extérieure et une paroi de carter radial côté sortie,
**caractérisé en ce que**
la paroi de carter radial (53) côté entraînement est réceptionnée de façon centrée sur le tourillon (23) du carter d'embrayage (60).

14. Dispositif d'accouplement selon la revendication 13,
**caractérisé en ce que**
la paroi de carter axial (55) est conçue avec une denture (57) pour la réception solidaire en rotation des éléments d'embrayage (92) côté entraînement.

15. Dispositif d'accouplement selon l'une quelconque des revendications 13 ou 14,
**caractérisé en ce que**,
sur le dispositif d'embrayage (54), le piston (94) délimite axialement l'espace de refroidissement (98) conjointement avec la paroi de carter radial (53) côté entraînement et l'espace de pression (97) conjointement avec la paroi de carter radial (56) côté sortie.

16. Dispositif d'accouplement selon l'une quelconque des revendications 1 à 15,
**caractérisé en ce que**
le piston (94) du dispositif d'embrayage (54) est réceptionné de façon déplaçable axialement sur le moyeu de carter d'embrayage (63), et au moins un accumulateur d'énergie axial (101) soutenant le processus de débrayage, qui s'appuie sur le moyeu de carter d'embrayage (63), est attribué au piston (94).

17. Dispositif d'accouplement selon l'une quelconque des revendications 1 à 16,
**caractérisé en ce que**
la conduite (116) formée dans le moyeu de carter d'embrayage (63) est conçue avec une fermeture (114) sur son extrémité côté entraînement.

18. Dispositif d'accouplement selon l'une quelconque des revendications 1 à 17,
**caractérisé en ce que**
le premier canal (111) de forme annulaire, s'étendant entre le moyeu de carter d'embrayage (63) et l'arbre de soutien (110) du dispositif d'embrayage (54), sert de seconde conduite d'alimentation (121).

19. Dispositif d'accouplement selon l'une quelconque des revendications 1 à 18,
**caractérisé en ce que**
le second canal (112) de forme annulaire, s'étendant entre l'arbre de soutien (110) du dispositif d'embrayage (54) et l'arbre d'entrée de boîte de vitesses (36), est prévu conjointement avec une conduite (123), traversant le moyeu (104) du support d'élément d'embrayage (103) côté sortie du dispositif d'embrayage (54), comme conduite d'évacuation (122).

20. Dispositif d'accouplement selon l'une quelconque des revendications 1 à 19 comprenant un alésage central formé dans l'arbre d'entrée de boîte de vitesses,
**caractérisé en ce que**
l'alésage central (113) de l'arbre d'entrée de boîte de vitesses (36) sert conjointement avec une liaison radiale (124) prévue dans l'arbre d'entrée de boîte de vitesses (36) comme autre partie de la seconde conduite d'alimentation (121).

21. Dispositif d'accouplement selon l'une quelconque des revendications 1 à 20,
**caractérisé en ce que**
les différentes conduites d'alimentation (120, 121) sont isolées les unes des autres entre elles et par rapport à la conduite d'évacuation (122) par au moins respectivement un joint (132a, 132b, 132c).

22. Dispositif d'accouplement selon la revendication 21 et la revendication 11,
**caractérisé en ce**
**qu'**un premier joint (132a) est disposé radialement entre l'arbre de soutien (110) et le moyeu (104) de l'amortisseur de vibrations de torsion (7) et/ou du support d'élément d'embrayage (103) côté sortie.

23. Dispositif d'accouplement selon la revendication 21 ou 22,
**caractérisé en ce que**
des seconds joints (132b, 132c) sont disposés respectivement radialement entre le moyeu de carter d'embrayage (63) et le carter de boîte de vitesses (42) de la boîte de vitesses (43).

24. Dispositif d'accouplement selon la revendication 9 ou selon l'une quelconque des revendications 10 à 23, si rapportées à la revendication 9,
**caractérisé en ce que**
le tourillon (23) dispose d'un évasement (41) qui est prévu pour le logement de l'arbre d'entrée de boîte de vitesses (36).
